# EUROPÄISCHE PATENTSCHRIFT

(11) **EP 3 183 369 B1**
(45) Veröffentlichungstag und Bekanntmachung des Hinweises auf die Patenterteilung: **07.11.2018**
(21) Anmeldenummer: 15735915.9
(22) Anmeldetag: 03.07.2015
(51) Int. Cl.: C21B 5/00, C21B 7/16, F27D 3/16, F27D 3/18

(54) **VERFAHREN ZUM EINBLASEN VON ERSATZREDUKTIONSMITTELN IN EINEN HOCHOFEN**
METHOD FOR BLOWING SUBSTITUTE REDUCING AGENTS INTO A BLAST FURNACE
PROCÉDÉ D'INJECTION D'AGENTS RÉDUCTEURS DE SUBSTITUTION DANS UN HAUT-FOURNEAU

(30) Priorität: 18.08.2014 DE 102014216336
(43) Veröffentlichungstag der Anmeldung: 28.06.2017
(73) Patentinhaber: Küttner Holding GmbH&Co. KG, 45130 Essen (DE)
(72) Erfinder: SCHOTT, Robin, 47809 Krefeld (DE); BARTELS-FREIHERR VARNBÜLER VON UND ZU HEMMINGEN, Christian, 40629 Düsseldorf (DE)
(74) Vertreter: Hoffmann Eitle
(86) Internationale Anmeldenummer: PCT/EP2015/065207
(87) Internationale Veröffentlichungsnummer: WO 2016/026604

(56) Entgegenhaltungen:
- EP-A1- 0 319 505
- EP-A1- 2 407 742
- EP-A1- 2 653 565
- WO-A-81/02584
- WO-A1-2013/094230
- WO-A1-2014/045876
- DE-A1- 19 606 575
- FR-A1- 2 452 520
- US-A- 3 236 629
- BABICH ET AL: "Co-Injection of non-coking and natural gas in blast furnace", ISIJ INTERNATIONAL, vol. 39, no. 39, 31 December 1999 (1999-12-31), pages 229-238,

## Beschreibung

### TECHNISCHES GEBIET

Die vorliegende Erfindung betrifft ein Verfahren zum pneumatischen Einblasen eines pulverförmigen Ersatzreduktionsmittels im Dichtstromverfahren mittels eines Transportgases in einen Vergasungsreaktor oder über eine Windform in einen Hochofen, so dass das Ersatzreduktionsmittel in einer Reaktion vergast wird. Gemäß einem weiteren Aspekt betrifft die Erfindung ein solches Verfahren, wobei das Ersatzreduktionsmittel mit dem Transportgas durch eine erste Einblaslanze eingeblasen wird, durch die zusätzlich zu dem Ersatzreduktionsmittel und dem Transportgas noch Sauerstoff zugeführt wird, der in einem Mündungsbereich der Einblaslanze mit dem Ersatzreduktionsmittel und dem Transportgas zusammengeführt wird. Ferner betrifft die vorliegende Erfindung eine Vorrichtung zur Durchführung eines solchen Verfahrens.

### STAND DER TECHNIK

Es ist beispielsweise aus "stahl und eisen" 133 (2013) Nr.1, S.49-62 bekannt und grundsätzlich üblich, bei der Roheisenerzeugung in einem Hochofen flüssige, gasförmige und/oder feste Ersatzreduktionsmittel bzw. Brennstoffe über die Windformen (auch: Blasformen) dem Hochofenprozess mit dem Zweck zuzuführen, vergleichsweise teuren Hochofenkoks zu ersetzen. Im vorliegenden Text wird einheitlich der Begriff "Ersatzreduktionsmittel" verwendet, der alle Reduktionsmittel und auch kohlenstoffhaltige Brennstoffe wie Kohle umfassen soll. Als feste Ersatzreduktionsmittel können, auch im Zusammenhang mit der vorliegenden Erfindung, neben Kohlen- und Koksstäuben auch zerkleinerte Kunststoffabfälle zum Einsatz kommen, wie beispielsweise in DE 198 59 354 A1 beschrieben ist. Hierbei ist es besonders wichtig, dass möglichst keine festen Partikel in die Koksschüttung eindringen können, da andernfalls Durchgasungs- und damit Prozessstörungen des Hochofens die Folge sein können. Häufig wird das Ersatzreduktionsmittel durch eine Einblaslanze über die Windform in den Hochofen eingeblasen. Durch den Heißwind bildet sich eine Wirbelzone, in welcher sich das eingeblasene Ersatzreduktionsmittel mit dem Heißwind der Windform vermischt. Um zu verhindern, dass feste Partikel in die Koksschüttung eindringen können, müsste das gesamte eingeblasene feste Ersatzreduktionsmittel in der Flugphase nach Austritt aus der Einblaslanze bis zum Ende der Wirbelzone, d.h. bevor es auf die Koksschüttung treffen kann, vergast werden.

Im vorliegenden Zusammenhang bedeutet "Vergasung" eine unvollständige Verbrennung, aus der vorzugsweise CO und/oder H₂ resultieren. Im Gegensatz dazu bedeutet "Verbrennung" eine vollständige Verbrennung, die beispielsweise zu CO₂ und H₂O führt. Da für den Hochofenprozess CO und H₂ besonders nützlich sind, ist das Ziel des Einblasens des Ersatzreduktionsmittels eine Vergasungsreaktion, mit deren Reaktionsprodukten besonders viel hochpreisiger Koksbrennstoff eingespart werden kann.

Im Bereich der Vergasungsreaktoren besteht das Ziel der Vergasungsreaktion üblicherweise darin, ein Reduktionsgas zu erzeugen, das als Produkt aus dem Vergasungsreaktor gewonnen wird. Im Hochofenprozess wird dagegen Reduktionsgas zur Gewinnung von Roheisen aus Eisenerz verwendet.

In bekannter Weise wird ein kohlenstoffhaltiges, pulverförmiges Ersatzreduktionsmittel wie beispielsweise Kohlenstaub pneumatisch im Dichtstrom- oder Flugstromverfahren mittels Stickstoff als inertem Transportgas über eine oder mehrere Transportleitungen den Windformen des Hochofens zugeführt, wie insbesondere in "STEEL & METALS Magazine", Vol. 27, Nr. 4,1989, S. 272-277, EP2407742A1 und DE 36 03 078 C1 beschrieben ist. Hier wird das Ersatzreduktionsmittel entweder mittels wenigstens einer in die Windform ragenden und aus einem Rohr bestehenden einfachen Einblaslanze oder mittels wenigstens einer in die Windform ragenden koaxialen Einblaslanze unter Verwendung von Sauerstoff eingeblasen.
Aus "Chemie Ingenieur Technik" 84 (2012) Nr.7, S. 1076-1084 ist beispielsweise eine koaxiale Einblaslanze bekannt, wobei die koaxiale Einblaslanze bevorzugt aus einem kohlefördernden Innenrohr und einem das Innenrohr unter Bildung eines Ringspaltes konzentrisch umgebenden Außenrohr besteht. Der Sauerstoff wird durch den Ringspalt geführt, wie auch in DE 40 08 963 C1 beschrieben ist.
Des Weiteren ist aus JPH-1192809 (A) bekannt, anstatt einer einfachen koaxialen Einblaslanze eine Einblaslanze, bestehend aus drei ineinander gesteckten Rohren zu verwenden, wobei der Kohlenstaub durch das innere Rohr, Sauerstoff durch den koaxialen Spalt zwischen dem inneren und dem das innere Rohr umgebende Rohr und Dampf oder ein Dampf-Kohlendioxidgemisch durch den 2. koaxialen Spalt zwischen dem zweiten und dem das zweite umgebenden dritten Rohr geführt wird.
Als Transportgas wird dabei stets reiner Stickstoff verwendet, der inert und damit vorteilhaft im Hinblick auf Explosionsschutz innerhalb der Förder- und Einblasanlange und außerdem in Hochofenwerken in der Regel leicht verfügbar ist.
Darüber hinaus ist aus CN 101000141(A), CN 102382915(A) und CN 102060197(A) bekannt, dass weitestgehend inerte Abgase oder Kohlendioxid statt Stickstoff als Transportgas zur pneumatischen Förderung und Einblasen von Kohlenstaub Verwendung finden können. Diese Ideen zielen darauf ab, den Umweltschutz zu verbessern und Energie einzusparen. In diesen Fällen werden entweder Abgase eines Heißwindbrenners oder möglichst reines Kohlendioxid eingesetzt.
Des Weiteren ist aus anderen Bereichen der Technik bekannt, dass bei der Herstellung von Synthesegasen durch Kohlenstaubdruckvergasung reines Kohlendioxid oder eine Mischung aus Kohlendioxid und Stickstoff dem pneumatischen Kohlenstaubtransportsystem als Inertisierungs-, Fluidisierungs- und Transportmedium zugeführt wird. Diesbezüglich wird beispielsweise auf DE 10 2007 020 294 A1 verwiesen.
Sofern als Transportgas Stickstoff eingesetzt wird, besteht der Nachteil, dass Stickstoff eine reaktionshemmende und verzögernde Wirkung auf die Vergasungsreaktion des Ersatzreduktionsmittels hat. Da die Partikel des Ersatzreduktionsmittels vom Stickstoff umhüllt werden, kann die Reaktion erst beginnen, sobald der Stickstoff verdrängt wurde. Dies führt zu einer Verzögerung der Reaktion und damit zu einer Verkürzung der für die Reaktion zur Verfügung stehenden Zeit gegenüber der Flugzeit des Ersatzreduktionsmittels, nachdem dieses die Einblaslanze verlassen hat.

Die sehr kurzen zur Verfügung stehenden Reaktionszeiten für die Vergasung des Ersatzreduktionsmittels beim Einblasen in die Windform und die Wirbelzone des Hochofens von nur einigen Millisekunden verdeutlichen, dass durch den Einsatz von Stickstoff als inertes Transportgas wichtige Reaktionszeit verloren geht und das mögliche Vergasungspotenzial des Ersatzreduktionsmittels beim Einblasen in den Hochofen so nicht optimal ausgenutzt wird.

Bei der Verwendung von Kohlendioxid als Transportgas wird die Hemmung der Reaktion weniger beobachtet. Allerdings sind die aus dem Stand der Technik bekannten Verfahren zur Verwendung von Kohlendioxid als Transportgas gegenüber der Verwendung von Stickstoff verhältnismäßig aufwendig und daher nachteilig. Außerdem lässt sich auch Kohlendioxid nicht optima! in den Vergasungsprozess des Ersatzreduktionsmittels einbinden, da verhältnismäßig viel Energie zugeführt werden muss, um das Kohlendioxid an einer Reaktion mit dem Ersatzreduktionsmittel zu beteiligen.

### DARSTELLUNG DER ERFINDUNG

Die Aufgabe der Erfindung besteht insgesamt darin, das Einblasen von Ersatzreduktionsmittel in einen Vergasungsreaktor, einen Hochofen oder einen anderen Reaktor verfahrenstechnisch derart zu gestalten, dass die Vergasungsreaktion des Ersatzreduktionsmittels effektiv und schnellstmöglich ablaufen kann um dadurch die erreichbare Einblasrate von Ersatzreduktionsmittel in den Reaktor, insbesondere den Hochofen, bei gleichzeitiger Reduzierung der Koksrate bzw. Brennstoffrate gemäß des Austauschfaktors Koks/Kohle bzw. Brennstoff/Ersatzreduktionsmittel weiter steigern und insgesamt die Brennstoffkosten weiter senken zu können.

Diese Aufgabe wird erfindungsgemäß durch die Verfahren nach Anspruch 1, Anspruch 2 oder Anspruch 8 und die Vorrichtung nach Anspruch 15 gelöst. Vorteilhafte Ausgestaltungen der Erfindung ergeben sich aus den Unteransprüchen.

Gemäß einem ersten Aspekt liegt die Erfindung in der Bereitstellung eines Verfahrens zum pneumatischen Einblasen eines pulverförmigen Ersatzreduktionsmittels im Dichtstromverfahren mittels eines Transportgases in einen Reaktor, insbesondere in einen Vergasungsreaktor oder über eine Windform in einen Hochofen, so dass das Ersatzreduktionsmittel in einer Vergasungsreaktion vergast wird.

Im Zusammenhang mit der vorliegenden Erfindung wird unter dem Dichtstromverfahren das Verfahren verstanden, wie es in "STEEL & METALS Magazine", Vol. 27, Nr. 4, 1989, S. 272-277 beschrieben wird. Im Zusammenhang mit der vorliegenden Erfindung zeichnet sich das Dichtstromverfahren gegenüber dem Flugstromverfahren durch eine hohe Fließdichte des pulverförmigen Materials von 60% oder mehr, besonders bevorzugt 80% oder mehr, der Packungsdichte im Schüttzustand aus. Das Flugstromverfahren wird dagegen bei Fließdichten von unter 25% betrieben.

Gemäß diesem Aspekt der Erfindung besteht das Transportgas aus einem Brenngas, dessen Komponenten (z.B. O₂ H₂O oder CO₂) oder deren Oxidationskomponenten (d. h. Komponenten, die vor der Vergasungsreaktion noch eine Oxidationsreaktion durchlaufen werden: z.B. CO, H₂, CH₄) zumindest teilweise an der Vergasungsreaktion des Ersatzreduktionsmittels beteiligt sind, und einem anderen Gas oder Gasgemisch. Das andere Gas/Gasgemisch unterscheidet sich vom Brenngas, so dass das Transportgas gemäß diesem ersten Aspekt nicht vollständig aus Brenngas besteht.

Gemäß einem weiteren Aspekt der Erfindung weist das Transportgas Kohlenmonoxid, Wasserstoff, Wasserdampf, Sauerstoff, Kohlenwasserstoffe oder einer Mischung hiervon, insbesondere Erdgas, Gichtgas, Koksgas oder Kokereigas, Konvertergas oder anderes Kuppelgas oder eine Mischung hiervon auf, wobei gemäß diesem weiteren Aspekt das Transportgas auch vollständig aus Brenngas bestehen kann.

Grundsätzlich ist das Transportgas beim Einblasen zu betrachten, d. h. in der Zusammensetzung, wie es in den Vergasungsreaktor oder über die Windform in den Hochofen einzublasen ist.

Unter einem Brenngas im Zusammenhang mit der vorliegenden Erfindung ist ein Gas zu verstehen, das während der Vergasung des Ersatzreduktionsmittels selbst brennbare Komponenten oder solche Komponenten, deren Oxidationskomponenten an der Vergasung des Ersatzreduktionsmittels beteiligt sind, aufweist. Brenngas umfasst Kohlenmonoxid, gegebenenfalls Kohlendioxid, Wasserstoff, Wasserdampf, Sauerstoff, Kohlenwasserstoffe oder einer Mischung hiervon, insbesondere Erdgas, Gichtgas, Koksgas oder Kokereigas, Konvertergas oder anderes Kuppelgas oder eine Mischung hiervon. Das Brenngas führt zu einer erheblichen Beschleunigung der Vergasungsreaktion des Ersatzreduktionsmittels, weil die der Vergasung zu Grunde liegende Reaktion bereits früh gezündet wird und hierfür mehr Zeit zur Verfügung steht, als wenn das Ersatzreduktionsmittel durch Stickstoff umhüllt wird. Bei manchen Brenngasen führt die Nutzung des Brenngases im Transportgas auch dazu, dass gegebenenfalls der Hochofenprozess oder andere Reaktionsprozess noch effizienter gestaltet werden kann. Wenn beispielsweise ein Gas, das Kohlenstoff enthält, als Brenngas im Rahmen des Einblasens des Ersatzreduktionsmittels in einen Hochofen eingebracht wird, führt dies zu einer, wenn auch nur sehr begrenzten, Einsparung von hochpreisigem Koks. Brenngase im Sinne der vorliegenden Erfindung sind jedoch - unabhängig von einer möglichen zusätzlichen Beteiligung am Reaktionsprozess im Reaktor, insbesondere am Hochofenprozess - solche Gase, welche direkt oder indirekt an der Vergasung des Ersatzreduktionsmittels beteiligt sind.

Bereits die Zuführung von 2 Gew.-% Brenngas führt zu einer bevorzugten früheren Zündung und einer beschleunigten Vergasung des Ersatzreduktionsmittels, wobei eine Erhöhung des Anteils des Brenngases am Transportgas zu einer weiteren Effizienzsteigerung führen kann. Für den Zeitpunkt der Zündung sind neben dem Anteil an Brenngas auch die Temperatur und der Druck in der Umgebung der Einblasstelle, insbesondere in der Wirbelzone von Bedeutung. Je nach den vorliegenden Bedingungen, kann es vorteilhaft sein, den Anteil des Brenngases weiter zu erhöhen. Somit ist es möglich, mehr Ersatzreduktionsmittel pro Zeiteinheit einzublasen als bei der Verwendung des herkömmlichen Stickstoffs.

Bevorzugt besteht das Transportgas zu mindestens 2 Gew.-%, bevorzugt zu mindestens 5 Gew.-%, weiter bevorzugt zu mindestens 10 Gew.-% aus dem Brenngas, wobei weiter bevorzugt ist, dass das Transportgas zu maximal 90 Gew.-%, weiter bevorzugt maximal 50 Gew.-%, weiter bevorzugt maximal 25 Gew.-%, weiter bevorzugt maximal 20 Gew.-% aus dem Brenngas besteht. Ein bevorzugter Gewichtsanteil des Brenngases am Transportgas liegt also zwischen 2 und 90 %, weiter bevorzugt zwischen 2 und 50 %, 2 und 25 % oder 2 und 20 %, weiter bevorzugt zwischen 5 und 90 %, 5 und 50 %, 5 und 25 %, 5 und 20 % oder 10 und 90 %, 10 und 50 %, 10 und 25 % und besonders bevorzugt zwischen 10 und 20 %.

Im Übrigen besteht das Transportgas gemäß dem ersten Aspekt der Erfindung aus dem anderen Gas oder Gasgemisch als dem Brenngas, wobei das andere Gas oder Gasgemisch bevorzugt Stickstoff aufweist. Es können aber auch andere Gase neben dem Brenngas im Transportgas enthalten sein. Vorzugsweise ist dabei darauf zu achten, dass diese anderen Gase einen ausreichenden Explosionsschutz bieten und keine nachteiligen Auswirkungen auf den Hochofenprozess und insbesondere die Vergasungsreaktion des Ersatzreduktionsmittels haben.

Insbesondere die nachfolgenden Reaktionen sind im Rahmen der vorliegenden Erfindung als Vergasungsreaktion des Ersatzreduktionsmittels (Kohlenstaubvergasungsreaktionen) anzusehen:
Oxidation der Flüchtigen: vol + O₂ → CO + H₂ + N₂
Partieller Koksausbrand: C + ½O₂ → CO
CO Oxidation / Dissoziation von Kohlendioxid:

   2CO + O₂ ↔ 2CO₂
Boudouard-Reaktion: C + CO₂ → 2CO
Wassergasreaktion (heterogen): C + H₂O → CO + H₂
Wassergasreaktion (homogen): CO + H₂O ↔ CO₂ + H₂
Knallgasreaktion / Dissoziation von Wasserdampf:

   2H₂ + O₂ ↔ 2H₂O
Erdgasreaktion: CH₄ + 2O₂ → CO₂ + 2H₂O

Die Erfindung, die insbesondere ein Verfahren zum Einblasen von kohlenstoffhaltigen, pulverförmigen Ersatzreduktionsmitteln bzw. Brennstoffen in einen Vergasungsreaktor oder Hochofen betrifft, kann in allen Bereichen der Technik ihrem Wesen nach in solchen Prozessen Anwendung finden, die verfahrenstechnisch, energetisch oder wirtschaftlich vorteilhaft beeinflusst werden, indem die im Prozess zum Einsatz kommenden pulverförmigen Ersatzreduktionsmittel bzw. Brennstoffe einem Reaktor zugeführt werden. Denn die vorteilhafte Beeinflussung durch den Einsatz von Ersatzreduktionsmittel bzw. Brennstoff kann aufgrund der möglichen Erhöhung der Einblasrate des Ersatzreduktionsmittels bzw. Brennstoffs verstärkt werden. Die Erfindung ist also nicht auf einen Hochofen oder Vergasungsreaktor beschränkt, sondern betrifft auch andere derartige Reaktoren. Solche Reaktoren können neben dem Vergasungsreaktor und dem Hochofen beispielsweise Schacht- und Kupolöfen, Wirbelschichten, Heißgaserzeuger und Brennkammern, gegebenenfalls unter Zuhilfenahme von elektrischer Energie, beispielsweise bei SAF (submerged arc furnace) oder EAF (electric arc furnace) Anlagen, sein. Vergasungsreaktoren und ganz besonders Hochöfen sind jedoch besonders bevorzugte Anwendungsfälle für das erfindungsgemäße Verfahren, weil hier durch eine leichte Modifikation bestehender Anlagen eine große Effizienzsteigerung erzielt werden kann.

Vorzugsweise werden das Transportgas und das Ersatzreduktionsmittel mit wenigstens einer bevorzugt in die Windform oder einen entsprechenden Raum des Reaktors oder einer Gaszuleitung hierfür ragenden ersten Einblaslanze eingeblasen. Durch eine solche Einblaslanze kann das Ersatzreduktionsmittel und das Transportgas gut mit dem Heißwind vermischt werden. Alternativ ist es aber auch möglich, dass das Ersatzreduktionsmittel mit dem Transportgas beispielsweise über eine einfache Öffnung in der Windform eingeblasen wird.

Dabei kann weiter bevorzugt Sauerstoffgas oder ein sauerstoffhaltiges Gasgemisch so in den Reaktor, insbesondere den Hochofen, eingeblasen werden, dass das Transportgas und das Ersatzreduktionsmittel im Mündungsbereich der ersten Einblaslanze(n) mit dem Sauerstoff oder dem sauerstoffhaltigen Gasgemisch zusammengeführt werden.

Eine vorteilhafte Ausgestaltung der Erfindung besteht darin, dass die erste Einblaslanze ein Innenrohr und ein das Innenrohr unter Bildung eines Ringspaltes umgebendes Außenrohr aufweist, wobei das Ersatzreduktionsmittel zusammen mit dem Transportgas durch das Innenrohr und der Sauerstoff oder sauerstoffhaltige Gasgemische durch den Ringspalt geführt werden.

Auf diese Weise wird das eingeblasene Ersatzreduktionsmittel direkt nach Austritt aus der ersten Einblaslanze mit reinem Sauerstoff oder einem sauerstoffhaltigen Gas umhüllt. Dadurch wird der für die Vergasungsreaktion wichtige Reaktionspartner Sauerstoff, das Ersatzreduktionsmittel und das im Transportgas befindliche Brenngas an der für den Beginn der Reaktion wichtigen Grenzfläche zwischen dem Einblasstrahl des Ersatzreduktionsmittels mit Transportgas und Sauerstoff im Mündungsbereich der ersten Einblaslanze zusammengeführt.

Die notwendige Reaktionsenergie wird einerseits durch die Rückstrahlung aus dem Reaktionsraum des Reaktors, insbesondere des Hochofens, und andererseits durch die dann einsetzende Vergasungsreaktion selbst bereitgestellt. Hierbei wird besonders ein Brenngas bevorzugt, dessen Energiebedarf zum Zünden der Vergasungsreaktion möglichst gering ist. In diesem Zusammenhang sind Kohlenmonoxid und Wasserstoff gegenüber Kohlendioxid und Wasserdampf vorteilhaft, denn sie erfordern eine niedrigere Temperatur zum Zünden der Vergasungsreaktion.

Gemäß einer alternativen vorteilhaften Ausgestaltung besteht die erste Einblaslanze aus einem einfachen Rohr, durch welches das Ersatzreduktionsmittel zusammen mit dem Transportgas geführt wird. Sauerstoff oder sauerstoffhaltiges Gas wird dann vorzugsweise über einen anderen geführten Weg, z.B. über eine zusätzliche Gaslanze, eine zweite Einblaslanze, oder über den Weg des Heißwindes durch die Windform dem Ersatzreduktionsmittel innerhalb der Windform zugeführt.

Auch auf diese Weise können alle Reaktionspartner der Vergasungsreaktion im Mündungsbereich der Einblaslanze zusammengeführt werden, auch wenn die zuvor beschriebene vorteilhafte Ausführungsform mit konzentrischen Rohren eine besser steuerbare und effizientere Zuführung von Ersatzreduktionsmittel, Transportgas und Sauerstoff ermöglicht.

Gemäß einem zweiten Aspekt der Erfindung betrifft diese ein Verfahren zum pneumatischen Einblasen eines pulverförmigen Ersatzreduktionsmittels im Dichtstromverfahren mittels eines Transportgases in einen Reaktor, insbesondere in einen Vergasungsreaktor oder über eine Windform in einen Hochofen, so dass das Ersatzreduktionsmittel in einer Vergasungsreaktion vergast wird, wobei das Ersatzreduktionsmittel mit dem Transportgas durch eine erste Einblaslanze eingeblasen wird, wobei dem Reaktor durch die erste Einblaslanze zusätzlich zu dem Ersatzreduktionsmittel und dem Transportgas noch Sauerstoff zugeführt wird, der in einem Mündungsbereich der ersten Einblaslanze mit dem Ersatzreduktionsmittel und dem Transportgas zusammengeführt wird. Dabei weist die erste Einblaslanze ein inneres erstes Rohr und ein darum herum angeordnetes zweites Rohr auf, wodurch ein das erste Rohr umgebender Ringspalt zwischen dem ersten und dem zweiten Rohr gebildet wird, wobei das Ersatzreduktionsmittel und das Transportgas durch das erste Rohr und der Sauerstoff durch den Ringspalt geführt werden. Dabei weist das Transportgas gemäß diesem Aspekt ein Brenngas auf, dessen Komponenten oder deren Oxidationskomponenten zumindest teilweise an der Vergasungsreaktion beteiligt sind. Für das Verfahren gemäß dem zweiten Aspekt der vorliegenden Erfindung wird die zur Zündung erforderliche Energieschwelle gegenüber dem allgemeinen oben beschriebenen Verfahren abgesenkt, indem das Brenngas sofort mit Sauerstoff in Kontakt kommt. In diesem Fall können auch beispielsweise Wasserdampf oder Kohlendioxid effizient als Brenngas eingesetzt werden.

Im Fall der zusätzlichen Zuführung von Sauerstoff über das den Ringspalt bildende zweite Rohr wird eine besonders gute Vergasung des Ersatzreduktionsmittels ermöglicht.

Es können vorzugsweise auch mehrere erste Einblaslanzen zum Einsatz kommen. Alternativ und zusätzlich können vorzugsweise mehrere zweite Einblaslanzen eingesetzt werden. Dabei können mehrere erste und/oder zweite Einblaslanzen in einer Windform oder in mehreren Windformen vorgesehen sein.

Es ist außerdem vorteilhaft, wenn die Strömung des zugeführten Sauerstoffs bzw. des sauerstoffhaltigen Gases und/oder des zugeführten Ersatzreduktionsmittels im Mündungsbereich der ersten Einblaslanze vermischt bzw. verwirbelt werden. Hierfür wird bevorzugt, dass ein Vermischen des Ersatzreduktionsmittels und Transportgases mit Sauerstoff durch eine Verwirbelungsstruktur gefördert wird.

Durch Turbulenz im Reaktionsraum werden die Reaktionspartner noch besser einander zugeführt, was eine noch schnellere und effektivere Vergasung des eingeblasenen Ersatzreduktionsmittels nach sich zieht.

Hierfür weist die erste Einblaslanze vorzugsweise eine Verwirbelungsstruktur auf, durch die im Mündungsbereich der ersten Einblaslanze ein Vermischen des Ersatzreduktionsmittels und Brenngases mit dem Sauerstoff gefördert wird. Eine solche Verwirbelungsstruktur ist beispielsweise eine Anordnung von Leitblechen im Bereich der Mündung der ersten Einblaslanze. Auch andere Verwirbelungsstrukturen sind möglich, durch die alternativ oder zusätzlich zum Sauerstoff das Ersatzreduktionsmittel oder der Heißwind verwirbelt werden. Solche Strukturen sind grundsätzlich unabhängig von einer Einblaslanze, können in Verbindung mit einer Einblaslanze jedoch besonders effizient eingesetzt werden.

Durch die vorliegende Erfindung, besonders in ihren bevorzugten Ausführungsformen, wird die reaktionshemmende und verzögernde Wirkung des bisher verwendeten, inerten Transportgases Stickstoff auf die Vergasungsreaktion des Ersatzreduktionsmittels vermieden. Dadurch wird die Geschwindigkeit der Vergasungsreaktionen des Ersatzreduktionsmittels beschleunigt. Dieser Effekt kann durch den zusätzlichen Einsatz von im Mündungsbereich der Einblaslanze zugeführtem reinem Sauerstoff oder einem sauerstoffhaltigen Gasgemisch weiter verstärkt und die Reaktionsgeschwindigkeit noch weiter beschleunigt werden. Ein weiterer wichtiger Grund für die Beschleunigung der Vergasungsreaktionen ist die frühzeitige Zündung des eingeblasenen Ersatzreduktionsmittels direkt nach Austritt aus der Einblaslanze, beispielsweise in den Heißwindstrom des Hochofens. Um dies zu erreichen wird gezielt die physikalische Tatsache ausgenutzt, dass die Ummantelung des eingeblasenen Ersatzreduktionsmittels mit Sauerstoff bzw. sauerstoffhaltigem Gasgemisch diatherman ist, wogegen das Transportgas Strahlung absorbiert. Daraus folgt, dass die Wärmestrahlung aus dem Reaktor, beispielsweise aus dem Heißwind, der Windformwand und aus der Wirbelzone des Hochofens, nahezu ungehindert durch den Sauerstoffmantel dringen und an der Grenzfläche Sauerstoff - Ersatzreduktionsmittel plus Brenngas seine Energie abgibt, die für die Zündung des Ersatzreduktionsmittels benötigt wird. Die für die Zündung des Ersatzreduktionsmittels nutzbare Energie wird somit genau an der richtigen Stelle, nämlich an dieser Grenzfläche, an die staubförmigen Körner des Ersatzreduktionsmittels und das an den Vergasungsreaktionen beteiligte Brenngas aufgrund von dort stattfindender Strahlungsabsorption abgegeben.

Aufgrund gleichbleibender Aufenthaltsdauer des Ersatzreduktionsmittels für dessen Vergasung beim Einblasen in den Reaktor, insbesondere in die Windform und Wirbelzone des Hochofens, ergibt sich insgesamt durch die Erfindung und insbesondere ihre bevorzugten Ausführungsformen eine Steigerung der maximal möglichen Einblasrate bei gleichzeitiger Senkung der Koksrate gemäß Austauschfaktor Koks/Kohle und damit eine Senkung der Brennstoffkosten des Hochofenbetriebs.

Eine weitere bevorzugte Ausgestaltung des Verfahrens besteht darin, dass das zugeführte Ersatzreduktionsmittel und/oder das Transportgas und/oder der bevorzugt zugeführte Sauerstoff bzw. das sauerstoffhaltige Gas auf Temperaturen zwischen 100°C und 950°C vorgeheizt ist bzw. sind.

Durch das Vorheizen der Reaktionspartner wird die Vergasung des Ersatzreduktionsmittels zusätzlich beschleunigt, da die Aufheizzeit nach Einblasen in den Reaktionsraum (Windform und Wirbelzone) der Reaktionspartner eingespart wird und somit die Vergasungsreaktionen insgesamt schneller ablaufen, was wiederum eine Steigerung der Einblasrate an umsetzbarem Ersatzreduktionsmittel möglich macht.

Des Weiteren wird bevorzugt, dass die Beladung des Transportgases mit Ersatzreduktionsmittel beim Einblasen in den Reaktor, insbesondere den Hochofen, in weiten Grenzen veränderlich ist und in Abhängigkeit der Reaktion eingestellt wird. Durch die Variation des Verhältnisses von Menge an Ersatzreduktionsmittel zu Menge an Brenngas kann ein für die Vergasung des Ersatzreduktionsmittels optimales Verhältnis eingestellt werden, welches in Abhängigkeit vom jeweiligen Betriebszustand des Reaktors, insbesondere des Hochofens oder Vergasungsreaktors, dessen individueller Ausgestaltung, der verwendeten Rohstoffe und der Umgebungsbedingungen verschieden sein kann.

Für die erfindungsgemäßen Verfahren ist es ferner vorteilhaft, wenn die Austrittsgeschwindigkeit und/oder die Einblasmenge des Ersatzreduktionsmittels und/oder ggf. die Austrittsgeschwindigkeit und/oder die Menge des Sauerstoffs aus der Einblaslanze in weiten Grenzen veränderlich sind und in Abhängigkeit der Reaktion eingestellt werden. Auf diese Weise kann alternativ und zusätzlich zu der zuvor beschriebenen Variation der Beladung des Transportgases mit Ersatzreduktionsmittel für die Vergasungsreaktion des Ersatzreduktionsmittels in Kombination mit dem Brenngas und ggf. dem Sauerstoff ein optimales Verhältnis eingestellt werden, welches in Abhängigkeit vom jeweiligen Betriebszustand des Reaktors, insbesondere des Hochofens oder Vergasungsreaktors, verschieden sein kann. Dies bedeutet insbesondere, dass die Austrittsgeschwindigkeit und/oder die Menge des Sauerstoffs unter Berücksichtigung der Reaktion bei einer voreingestellten Austrittsgeschwindigkeit und/oder Menge des Sauerstoffs verändert werden können, um optimale Parameter für die Vergasungsreaktion des Ersatzreduktionsmittels einzustellen.

Je nach Bauart des Reaktors, beispielsweise des Hochofens, insbesondere der Windform und des Einblasmechanismus, oder des Vergasungsreaktors, sowie je nach verwendetem Brenngas ist es möglich, die Beladung des Transportgases, d.h. das Massenstromverhältnis zwischen Brenngas und Ersatzreduktionsmittel, visuell zu optimieren. Wenn das Ersatzreduktionsmittel zusammen mit dem Brenngas reagiert, entsteht insbesondere bei Zuführung von Sauerstoff in den Reaktionsraum eine Lichterscheinung. Es kann so viel Ersatzreduktionsmittel zugeführt werden, bis diese Lichterscheinung erlischt. Um die Menge an zuzugebendem Ersatzreduktionsmittel zu maximieren, kann die Zuführungsmenge an Brenngas und/oder ggf. Sauerstoff, aber auch die Austrittsgeschwindigkeit des Ersatzreduktionsmittels, Brenngases und/oder ggf. Sauerstoffs so eingestellt werden, dass die Lichterscheinung bei möglichst hoher Zuführmenge an Ersatzreduktionsmittel zu beobachten ist.

In Ausführungsformen, in denen eine Lichterscheinung nicht auftritt oder beobachtet werden kann, ist es grundsätzlich möglich, anhand der Betriebsparameter des Reaktionsprozesses, insbesondere des Hochofenprozesses, ein Optimum der für eine maximale Zuführungsmenge an Ersatzreduktionsmittel erforderlichen Einstellungen für die Zuführungsmenge an Brenngas und/oder ggf. Sauerstoff und Austrittsgeschwindigkeit des Ersatzreduktionsmittels, Brenngases und/oder ggf. Sauerstoffs zu finden.

Bevorzugt besteht das Brenngas aus Erdgas, Gichtgas, Koksgas oder Kokereigas, Konvertergas oder einem anderen Kuppelgas oder einer Mischung hiervon. Vor allem Gichtgas und Koksgas sind aus dem Umfeld einer Hochofenanlage leicht und in großen Mengen zu beschaffende Brenngase, die sich aus diesem Grund anlagentechnisch besonders als Brenngas eignen. Außerdem enthalten diese Gase zu großen Anteilen Komponenten, die selbst oder über ihre Oxidationskomponenten an der Vergasungsreaktion des Ersatzreduktionsmittels beteiligt sind.

Insbesondere Kohlendioxid und Wasserdampf stellen an ihre Verwendung als Brenngas erhöhte Anforderungen an die Reaktionsbedingungen. Denn bei diesen Komponenten besteht ein beispielsweise gegenüber Kohlenmonoxid oder Wasserstoff höherer Energiebedarf, um den Sauerstoffanteil aus diesen Molekülen herauszulösen und dadurch eine für die Vergasung des Ersatzreduktionsmittels günstige Gasumgebung zu schaffen. Daher werden diese Brenngase bevorzugt dann eingesetzt, wenn zusätzlich Sauerstoff möglichst hoher Konzentration insbesondere im Bereich der Mündung der Einblaslanze, sofern vorhanden, zugeführt wird.

Insgesamt führt das erfindungsgemäße Verfahren, besonders in seine bevorzugten Ausführungsformen, zu einer verfahrenstechnischen, energetischen und wirtschaftlichen Verbesserung des Hochofenprozesses bzw. des betrachteten Prozesses.

Eine erfindungsgemäße Vorrichtung zur Durchführung eines Verfahrens, wie es vorstehend beschrieben wurde, umfasst eine Einblaslanze zum Einblasen des Ersatzreduktionsmittels in den Reaktor, insbesondere in den Vergasungsreaktor oder in die Windform des Hochofens, ein Gefäß zum Aufnehmen des Transportgases und/oder des Ersatzreduktionsmittels und eine Transportleitung zum Zuführen des Ersatzreduktionsmittels von dem Gefäß zur Einblaslanze. Die Vorrichtung ist dadurch gekennzeichnet, dass sie ferner eine Brenngaszuführung aufweist, durch die dem Transportgas stromauf der Einblaslanze ein Brenngas zuführbar ist.

Die erfindungsgemäße Vorrichtung weist also eine Brenngaszuführung auf, durch die zusätzlich zu einem anderen Gas für den Transport des Ersatzreduktionsmittels das Brenngas dem Transportgas in einem definierbaren Gewichtsanteil zugeführt werden kann. Diese Brenngaszuführung ist im Bereich stromauf der Einblaslanze angeordnet, so dass sich durch die Einblaslanze das Transportgas samt Brenngas in den Reaktor, insbesondere die Windform des Hochofens oder den Vergasungsreaktor einblasen lässt. Grundsätzlich ist es möglich, das Brenngas überall entlang der Transportleitung stromauf der Einblaslanze oder in dem Gefäß dem Transportgas zuzuführen. Je näher die Brenngaszuführung an der Einblaslanze angeordnet ist, desto günstiger ist die Anordnung aber im Hinblick auf sicherheitstechnische Überlegungen. Zudem ist der für die Zuführung erforderliche Druck umso geringer, je näher die Zuführung an der Einblaslanze stattfindet. Bevorzugt ist die Brenngaszuführung dabei an der Transportleitung angeordnet und dabei ist besonders bevorzug ein Abstand entlang der Transportleitung von der Brenngaszuführung zur Einblaslanze kleiner als ein Abstand entlang der Transportleitung zum Gefäß, in dem das Ersatzreduktionsmittel, ggf. mit dem anderen Gas des Transportgases, aufbewahrt wird. Mit Vorteil ist die Brenngaszuführung unmittelbar vor der Einblaslanze angeordnet. Weiter bevorzugt ist die Brenngaszuführung bei einem Transportleitungssystem mit Verteilervorrichtung stromab der Verteilervorrichtung angeordnet.

Weitere Merkmale und Vorteile der Erfindung ergeben sich aus der Gesamtheit der Patentansprüche und der nachfolgenden Figurenbeschreibung.

### KURZE FIGURENBESCHREIBUNG

Figuren 1a bis 1c zeigen schematisch eine bevorzugte Einblasanlage für einen Hochofen sowie einige Details einer solchen Einblasanlage.
Figur 2 zeigt eine weitere bevorzugte Einblasanlage, die einen statischen Verteiler aufweist.
Figur 3 zeigt eine weitere bevorzugte Einblasanlage, die ein Verteilgefäß statt eines statischen Verteilers aufweist.

### WEGE ZUR AUSFÜHRUNG DER ERFINDUNG

Gleiche oder entsprechende Elemente werden in der folgenden Figurenbeschreibung durch gleiche Bezugszeichen gekennzeichnet und auf eine wiederholende Beschreibung verzichtet. Grundsätzlich können Merkmale, die im Zusammenhang mit einer Ausführungsform beschrieben wurden, auch in einer anderen Ausführungsform realisiert werden. Dies gilt insbesondere für die Anordnung und Ausgestaltung von strömungsbeeinflussenden Elementen wie Ventilen, Drosseln oder Verteilern sowie für die Ausgestaltung des Mechanismus zum Einblasen des Ersatzreduktionsmittels in die Windform.

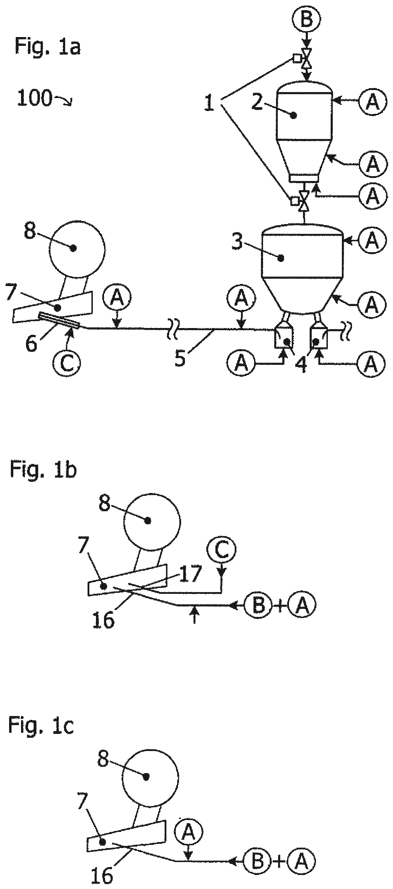

Figur 1a ist eine schematische Darstellung einer ersten bevorzugten Einblasanlage 100. Die Einblasanlage 100 umfasst eine Windform 7, über die Heißwind aus einem Windring 8 in einen Hochofen eingeblasen werden kann. In der Windform 7 ist eine bevorzugt als koaxiale Staub- und Gaseinblaslanze ausgebildete Einblaslanze 6 angeordnet, durch die dem Heißwind im Dichtstromverfahren gleichzeitig ein erster Strom aus Ersatzreduktionsmittel und Transportgas, das ein Brenngas aufweist, und ein zweiter Strom, der Sauerstoff oder ein sauerstoffhaltiges Gas aufweist, zugeführt werden kann.

Die Einblaslanze 6 ist in der dargestellten Ausführungsform mit einer Einzeltransportleitung 5 verbunden, durch die das Ersatzreduktionsmittel von einem Einblasgefäß 3 über ein Fluidisierungsgefäß 4 zur Einblaslanze 6 transportiert werden kann. In einer Hochofenanlage können bevorzugt mehrere Einblaslanzen 6, Einzeltransportleitungen 5 und gegebenenfalls auch Fluidisierungsgefäße 4 vorhanden sein, um eine möglichst große Menge an Ersatzreduktionsmittel möglichst gleichmäßig verteilt in den Hochofen einzublasen.

Stromauf des Einblasgefäßes 3 befindet sich in der Darstellung gemäß Figur 1a eine Druckschleuse 2, durch die dem unter Druck stehenden Einblasgefäß 3 wahlweise Ersatzreduktionsmittel zugeführt und dieses somit nachgefüllt werden kann. Beispielsweise kann die Druckschleuse 2 unter Umgebungsdruck mit Kohlenstaub oder einem anderen Ersatzreduktionsmittel gefüllt, die Druckschleuse 2 dann auf den Förderdruck des Einblasgefäßes 3 gebracht und anschließend das Ersatzreduktionsmittel in das Einblasgefäß 3 entlassen werden. Um dies zu steuern, ist in Figur 1a jeweils ein Abschlussventil 1 stromab und stromauf der Druckschleuse 2 angeordnet, wobei die in der vorliegenden Beschreibung beispielhaft erwähnten Ventile und anderen strömungsbeeinflussenden Elemente auch ergänzt, abgewandelt, ersetzt und zum Teil auch ausgelassen werden können.

Figur 1a zeigt an mit "A" gekennzeichneten Stellen Orte, an denen beispielsweise Transportgas und/oder Brenngas in das System eingegeben werden kann. An der mit "B" gekennzeichneten Stelle stromauf des ersten Abschlussventils 1 ist in der in Figur 1a skizzierten Ausführungsform vorgesehen, das Ersatzreduktionsmittel oder einen Brennstoff in das System einzubringen.

Im Bereich der Stellen "A" der Einzeltransportleitung 5 kann dem Transportgas vorzugsweise ein Brenngas zugegeben werden, so dass das Transportgas beispielsweise zu mindestens 2 Gew.-% aus Brenngases besteht, dessen Komponenten oder deren Oxidationskomponenten zumindest teilweise an einer Vergasungsreaktion des Ersatzreduktionsmittels in der Windform 7 und dem Hochofen beteiligt sind. Das Brenngas kann vorzugsweise an einer oder beiden der mit "A" gekennzeichneten Stellen der Einzeltransportleitung 5 in das System eingegeben werden, so dass das stromab dieser Stelle befindliche Transportgas zu mindestens 2 Gew.-% aus dem Brenngas und im Übrigen aus einem anderen Gas oder Gasgemisch besteht und somit zu einem besonders effizienten Einblasen des Ersatzreduktionsmittels im Hinblick auf dessen nachfolgende Vergasung führt.

An der mit "C" gekennzeichneten Stelle unmittelbar stromauf der Einblaslanze 6 ist in der in Figur 1a gezeigten Ausführungsform vorgesehen, dass die Einblaslanze 6 mit Sauerstoff beschickt wird. Bei der Einblaslanze 6 in der in Figur 1a gezeigten Ausführungsform handelt es sich vorzugsweise um eine Ausgestaltung, in der das Ersatzreduktionsmittel mit dem Transportgas, welches zu mindestens 2 Gew.-% aus Brenngas besteht, durch ein zentrales Rohr in die Windform 7 eingegeben wird, welches Rohr von einem Ringspalt umgeben wird, durch den Sauerstoff oder ein sauerstoffhaltiges Gas als Mantelstrom des Transportgases in die Windform 7 geblasen wird.

Eine solche Ausgestaltung der Einblaslanze 6 führt zu einer besonders effizienten Vergasungsreaktion, die deswegen besonders schnell abläuft und besonders früh einsetzt und somit die Zugabe einer besonders großen Menge an Ersatzreduktionsmittel und das Einsparen einer besonders großen Menge des hochwertigen und teuren Hochofenkoks erlaubt.

Figur 1b zeigt eine alternative Ausführungsform des Einblasmechanismus, der eine einfache Staubeinblaslanze 16 und eine einfache Gaseinblaslanze 17 aufweist. Über die Staubeinblaslanze 16 werden das Ersatzreduktionsmittel mit Transportgas und über die Gaseinblaslanze 17 der Sauerstoff in die Windform 7 eingeblasen.

Vorzugsweise wird unmittelbar vor der einfachen Staubeinblaslanze 16 an der mit "A" gekennzeichneten Stelle dem Ersatzreduktionsmittel und Transportgas das Brenngas zugeführt. Es ist jedoch auch möglich, dass das Brenngas schon vorher in dem Zuführungssystem enthalten ist und das Ersatzreduktionsmittel bereits wesentlich weiter stromauf der in Figur 1b gezeigten Stelle durch das bereits teilweise oder vollständig das Brenngas enthaltende Transportgas gefördert wird.

Figur 1c illustriert eine weitere bevorzugte Ausführungsform, bei der nur eine einfache Staubeinblaslanze 16 vorgesehen ist, während auf das geführte Einblasen von Sauerstoff verzichtet wird. Sauerstoff kann dabei durch entsprechende Anreicherung des Heißwindes über den Windring 8 zugeführt werden oder dem Heißwind ohne gesonderte Anreicherung entnommen werden, um die Vergasungsreaktion des Ersatzreduktionsmittels durchzuführen.

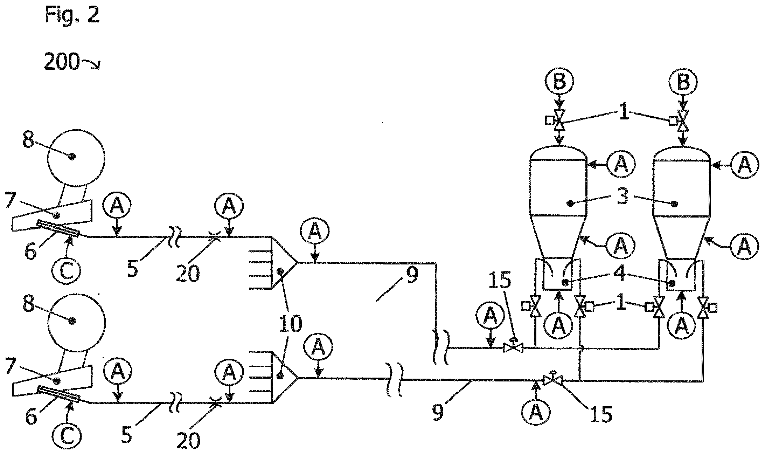

Figur 2 zeigt eine alternative Ausführungsform einer Einblasanlage 200.

Im Gegensatz zur Einblasanlage gemäß Figur 1a zeigt Figur 2 eine Einblasanlage 200 ohne separate Druckschleuse. Eine solche separate Druckschleuse kann jedoch auch in der Ausführungsform gemäß Figur 2 vorgesehen sein. In der Einblasanlage 200 sind insbesondere zwei separate Einblasgefäße 3 vorgesehen, wobei auch mehr als zwei Einblasgefäße 3 vorhanden sein können. Von den Einblasgefäßen 3 gelangt das Ersatzreduktionsmittel und Transportgas ähnlich wie der Ausführungsform aus Figur 1a jeweils über ein Fluidisierungsgefäß 4 in ein Leitungssystem.

Die Einblasanlage 200 umfasst beispielhaft zwei Sammeltransportleitungen 9. Grundsätzlich kann auch nur eine einzige Sammeltransportleitung 9 oder es können mehr als zwei Sammeltransportleitungen 9 vorgesehen werden. Über die Sammeltransportleitungen 9 gelangt das Ersatzreduktionsmittel samt Transportgas von dem Fluidisierungsgefäß 4 zu einem statischen Verteiler 10, in dem dieses auf mehrere Einzeltransportleitungen 5 verteilt wird. Die Einzeltransportleitungen 5 führen dann jeweils zu einer Einblaslanze 6, wobei diese auch bei der Einblasanlage 200 wie in Zusammenhang mit Figur 1 beschrieben ausgestaltet und modifiziert werden kann.

Bevorzugt umfassen die Einzeltransportleitungen 5 jeweils eine Drossel 20, um die Verteilung des einzublasenden Ersatzreduktionsmittels zuverlässig einstellen zu können. Alternativ und zusätzlich können die Einzeltransportleitungen 5 auch mit Regelventilen ausgestattet sein.

Besonders bevorzugt wird das Brenngas dem Transportgas an den mit "A" gekennzeichneten Stellen der Einzeltransportleitungen 5 zugefügt. Grundsätzlich ist es zwar auch möglich, das Brenngas stromauf dieser Stellen, nämlich beispielsweise im Bereich der Sammeltransportleitungen 9 oder direkt den Einblasgefäßen 3 zuzuführen. Aus sicherheitstechnischen Gründen wird jedoch bevorzugt, das Brenngas erst so weit stromab wie möglich dem Transportgas zuzuführen. Insbesondere kann so das Explosionsrisiko der Einblasanlage sehr klein gehalten werden.

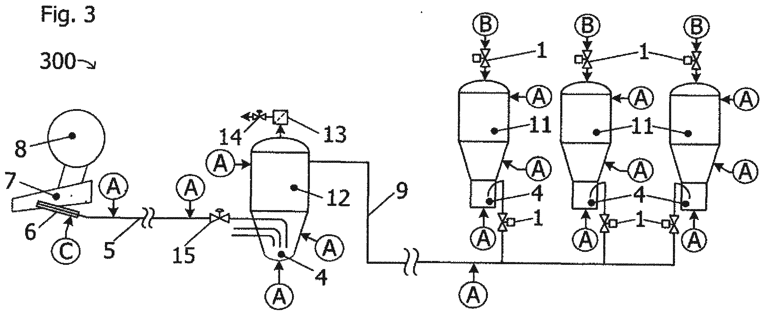

Figur 3 zeigt eine weitere bevorzugte Ausführungsform einer Einblasanlage 300, wobei die Einblasanlage 300 gemäß Figur 3 an Stelle der Einblasgefäße 3 der beiden bisher beschriebenen Ausführungsform drei Zwischentransportgefäße 11 aufweist.

Von den Zwischentransportgefäßen 11 gelangt das Ersatzreduktionsmittel und Transportgas über eine Sammeltransportleitung 9 zu einem Verteilgefäß 12. Von dem Verteilgefäß 12 kann über ein Fluidisierungsgefäß 4 analog zu den oben beschriebenen Ausführungsformen Ersatzreduktionsmittel mit Transportgas über eine Einzeltransportleitung 5 zu der Einblaslanze 6 zum Einblasen in die Windform 7 geführt werden. Statt der Einblaslanze 6 können auch in dieser Ausführungsform andere Mechanismen zum Einblasen des Ersatzreduktionsmittels in die Windform 7 eingesetzt werden.

Aus dem Verteilgefäß 12 kann über ein Gasregelventil 14, das einem Filter 13 nachgelagert ist, überschüssiges Gas an die Umgebung abgegeben werden. Im Übrigen enthält auch die dritte bevorzugte Ausführungsform der Einblasanlage 300 einige Ventile, insbesondere Abschlussventile 1 und Staubregelventile 15, um die Strömung des Ersatzreduktionsmittels und Transportgases zuverlässig steuern zu können. Der Vollständigkeit halber sei erwähnt, dass derartige Ventile, insbesondere auch die Staubregelventile 15, auf den Einzeltransportleitungen 5 und auch auf der Sammeltransportleitung 9 oder den Sammeltransportleitungen 9 vorgesehen sein können. An die Anordnung und Ausgestaltung von Ventilen, Gefäßen und ähnlichen Komponenten so wie die Ausgestaltung des Gastransportsystems werden im Zusammenhang mit der vorliegenden Erfindung keine besonderen Anforderungen gestellt, sondern diese ergeben sich aus der fachmännischen Auslegung einer Einblasanlage, wie sie grundsätzlich bekannt ist.

Auch in der in Figur 3 gezeigten Ausführungsform wird das Brenngas dem Transportgas besonders bevorzugt an den mit "A" gekennzeichneten Stellen der Einzeltransportleitung 5 zugeführt. Es ist jedoch analog zu den zuvor beschriebenen Ausführungsformen gemäß Figuren 1 und 2 auch möglich, das Brenngas an anderen Stellen in das System einzugeben. Beispielhaft sind auch in Figur 3 verschiedene Stellen mit "A" gekennzeichnet, an denen das Brenngas dem System zugeführt werden kann.

Die zuvor beschriebenen Ausführungsformen zeigen drei beispielhafte Möglichkeiten auf, wie das erfindungsgemäße Verfahren anlagentechnisch umgesetzt werden kann. Die Erfindung ist jedoch nicht auf diese speziellen Ausgestaltungen einer Einblasanlage beschränkt, sondern kann auch in andersartigen Vorrichtungen eingesetzt werden.

Insbesondere die Ausgestaltung der Einblaslanze(n) kann für jede Einblasanlage individuell auswählt und kombiniert werden, wobei die im Zusammenhang mit Figur 1 illustrierten beispielhaften Ausführungsformen selbstverständlich auch in den Ausführungsformen gemäß Figur 2 und Figur 3 eingesetzt und beliebig kombiniert werden können.

Durch die vorstehend beschriebenen Einblasanlagen kann das erfindungsgemäße Verfahren gut angewendet werden. Auf diese Weise ist es möglich, im Hochofenprozess oder bei Vergasungsreaktoren erhebliche Einsparungen der Brennkosten zu erzielen, indem eine größere Menge an Ersatzreduktionsmittel in den Hochofen oder Reaktor eingeblasen wird, als dies bei Verfahren aus dem Stand der Technik möglich ist, weil die Vergasungsreaktion erfindungsgemäß schneller ablaufen und früher einsetzen kann.

## Patentansprüche

1. Verfahren zum pneumatischen Einblasen eines pulverförmigen Ersatzreduktionsmittels im Dichtstromverfahren, bei dem eine Fließdichte des pulverförmigen Ersatzreduktionsmittels 60% oder mehr der Packungsdichte im Schüttzustand beträgt, mittels eines Transportgases in einen Reaktor, insbesondere in einen Vergasungsreaktor oder über eine Windform (7) in einen Hochofen,
so dass das Ersatzreduktionsmittel in einer Vergasungsreaktion vergast wird,
**dadurch gekennzeichnet, dass** das Transportgas ein Brenngas, nämlich Kohlenmonoxid, Wasserstoff, Wasserdampf, Sauerstoff, Kohlenwasserstoff, Gichtgas, Erdgas, Koksgas, Konvertergas, ein anderes Kuppelgas oder einer Mischung hiervon aufweist.

2. Verfahren zum pneumatischen Einblasen eines pulverförmigen Ersatzreduktionsmittels im Dichtstromverfahren, bei dem eine Fließdichte des pulverförmigen Ersatzreduktionsmittels 60% oder mehr der Packungsdichte im Schüttzustand beträgt, mittels eines Transportgases in einen Reaktor, insbesondere in einen Vergasungsreaktor oder über eine Windform (7) in einen Hochofen,
so dass das Ersatzreduktionsmittel in einer Vergasungsreaktion vergast wird,
**dadurch gekennzeichnet, dass** das Transportgas zu aus einem Brenngas, dessen Komponenten oder deren Oxidationskomponenten zumindest teilweise an der Vergasungsreaktion beteiligt sind, und aus einem anderen Gas oder Gasgemisch als dem Brenngas besteht.

3. Verfahren nach einem der vorhergehenden Ansprüche, wobei das Transportgas zu mindestens 2 Gew.-%, bevorzugt zu mindestens 5 Gew.-%, vorzugsweise mindestens 10 Gew.-% aus dem Brenngas besteht, wobei das Transportgas insbesondere zu maximal 90 Gew.-%, bevorzugt maximal 50 Gew.-%, weiter bevorzugt maximal 25 Gew.-%, weiter bevorzugt maximal 20 Gew.-% aus dem Brenngas besteht,
und/oder wobei das andere Gas Stickstoff aufweist.

4. Verfahren nach einem der vorhergehenden Ansprüche, wobei das Ersatzreduktionsmittel mit dem Transportgas durch eine erste Einblaslanze (6, 16) eingeblasen wird,
wobei die erste Einblaslanze (6, 16) bevorzugt in die Windform (7) hinein ragt.

5. Verfahren nach Anspruch 4, wobei dem Reaktor durch die erste Einblaslanze (6) zusätzlich zu dem Ersatzreduktionsmittel und dem Transportgas noch Sauerstoff zugeführt wird, der in einem Mündungsbereich der ersten Einblaslanze (6) mit dem Ersatzreduktionsmittel und dem Transportgas zusammengeführt wird,
wobei die erste Einblaslanze (6) bevorzugt ein inneres erstes Rohr und ein darum herum angeordnetes zweites Rohr aufweist, wodurch ein das erste Rohr umgebender Ringspalt zwischen dem ersten und dem zweiten Rohr gebildet wird, wobei das Ersatzreduktionsmittel und das Transportgas durch das erste Rohr und der Sauerstoff durch den Ringspalt geführt werden, oder
wobei die erste Einblaslanze (16) ein einfaches Rohr ist und wobei durch eine zweite Einblaslanze (17) Sauerstoff in den Reaktor, bevorzugt über die Windform (7) in den Hochofen, geführt wird.

6. Verfahren zum pneumatischen Einblasen eines pulverförmigen Ersatzreduktionsmittels im Dichtstromverfahren, bei dem eine Fließdichte des pulverförmigen Ersatzreduktionsmittels 60% oder mehr der Packungsdichte im Schüttzustand beträgt, mittels eines Transportgases in einen Reaktor, insbesondere in einen Vergasungsreaktor oder über eine Windform (7) in einen Hochofen,
so dass das Ersatzreduktionsmittel in einer Vergasungsreaktion vergast wird,
wobei das Ersatzreduktionsmittel mit dem Transportgas durch eine erste Einblaslanze (6) eingeblasen wird,
wobei dem Reaktor durch die erste Einblaslanze (6) zusätzlich zu dem Ersatzreduktionsmittel und dem Transportgas noch Sauerstoff zugeführt wird, der in einem Mündungsbereich der ersten Einblaslanze (6) mit dem Ersatzreduktionsmittel und dem Transportgas zusammengeführt wird,
wobei die erste Einblaslanze (6) ein inneres erstes Rohr und ein darum herum angeordnetes zweites Rohr aufweist, wodurch ein das erste Rohr umgebender Ringspalt zwischen dem ersten und dem zweiten Rohr gebildet wird, wobei das Ersatzreduktionsmittel und das Transportgas durch das erste Rohr und der Sauerstoff durch den Ringspalt geführt werden, **dadurch gekennzeichnet, dass** das Transportgas ein Brenngas aufweist, dessen Komponenten oder deren Oxidationskomponenten zumindest teilweise an der Vergasungsreaktion beteiligt sind.

7. Verfahren nach einem der Ansprüche 5 oder 6, wobei das Ersatzreduktionsmittel mit dem Brenngas und/oder der Sauerstoff durch mehrere erste und/oder mehrere zweite Einblaslanzen über die Windform in den Reaktor, insbesondere den Hochofen, geführt werden.

8. Verfahren nach einem der Ansprüche 5 bis 7, wobei die Austrittsgeschwindigkeit und/oder die Menge des Sauerstoffs in Abhängigkeit der Reaktion eingestellt werden.

9. Verfahren nach einem der vorhergehenden Ansprüche, wobei ein Vermischen des Ersatzreduktionsmittels und Transportgases mit Sauerstoff durch eine Verwirbelungsstruktur gefördert wird.

10. Verfahren nach einem der vorhergehenden Ansprüche, wobei ein Verhältnis zwischen Ersatzreduktionsmittel und Brenngas und/oder eine Austrittsgeschwindigkeit und/oder eine Einblasmenge des Ersatzreduktionsmittels und Transportgases in Abhängigkeit der Reaktion eingestellt werden.

11. Verfahren nach einem der vorhergehenden Ansprüche, wobei das Transportgas und/oder das Ersatzreduktionsmittel und/oder der Sauerstoff eine Temperatur von zwischen 100°C und 950°C aufweisen.

12. Verfahren nach einem der Ansprüche 2 bis 11, wobei das Brenngas aus Kohlenmonoxid, Kohlendioxid, Wasserstoff, Wasserdampf, Sauerstoff, Kohlenwasserstoff oder einer Mischung hiervon, insbesondere aus Gichtgas, Erdgas, Koksgas, Konvertergas, einem anderen Kuppelgas oder einer Mischung hiervon besteht.

## Claims

1. Method for the pneumatic injection of a powdered substitute reducing agent in the dense phase method, wherein a flowing density of the powdered substitute reducing agent amounts to 60% or more of the packing density in the bulk state, by means of a carrier gas into a reactor, in particular into a gasification reactor or via a tuyere (7) into a blast furnace,
so that the substitute reducing agent is gasified in a gasification reaction,
**characterised in that** the carrier gas comprises a fuel gas, namely carbon monoxide, hydrogen, water vapour, oxygen, hydrocarbon, furnace gas, natural gas, coke gas, converter gas, a different blast furnace gas or a mixture thereof.

2. Method for the pneumatic injection of a powdered substitute reducing agent in the dense phase method, wherein a flowing density of the powdered substitute reducing agent amounts to 60% or more of the packing density in the bulk state, by means of a carrier gas into a reactor, in particular into a gasification reactor or via a tuyere (7) into a blast furnace,
so that the substitute reducing agent is gasified in a gasification reaction,
**characterised in that** the carrier gas consists of a fuel gas, the components or oxidation components of which participate at least partially in the gasification reaction, and of a gas or gas mixture different to the fuel gas.

3. Method according to one of the preceding claims, wherein the carrier gas consists to at least 2 % by weight, preferably to at least 5 % by weight, preferably at least 10 % by weight of the fuel gas, wherein the carrier gas consists in particular up to a maximum of 90 % by weight, preferably up to a maximum of 50 % by weight, further preferably up to a maximum of 25 % by weight, further preferably up to a maximum of 20 % by weight of the fuel gas,
and/or wherein the other gas comprises nitrogen.

4. Method according to one of the preceding claims, wherein the substitute reducing agent, together with the carrier gas, is blown in through a first injection lance (6, 16),
wherein the first injection lance (6, 16) preferably projects into the tuyere (7).

5. Method according to claim 4, wherein, in addition to the substitute reducing agent and the carrier gas, oxygen is also fed into the reactor through the first injection lance (6), said oxygen being combined with the substitute reducing agent and the carrier gas in a nozzle region of the first injection lance (6),
wherein the first injection lance (6) preferably comprises an inner first pipe and a second pipe arranged around this, as a result of which an annular gap is formed between the first and the second pipe, surrounding the first pipe, wherein the substitute reducing agent and the carrier gas are passed through the first pipe and the oxygen is passed through the annular gap, or
wherein the first injection lance (16) is a simple pipe and wherein oxygen is fed into the reactor, preferably via the tuyere (7) into the blast furnace, through a second injection lance (17).

6. Method for the pneumatic injection of a powdered substitute reducing agent in the dense phase method, wherein a flowing density of the powdered substitute reducing agent amounts to 60% or more of the packing density in the bulk state, by means of a carrier gas into a reactor, in particular into a gasification reactor or via a tuyere (7) into a blast furnace,
so that the substitute reducing agent is gasified in a gasification reaction,
wherein the substitute reducing agent, together with the carrier gas, is blown in through a first injection lance (6),
wherein, in addition to the substitute reducing agent and the carrier gas, oxygen is also fed into the reactor through the first injection lance (6), said oxygen being combined with the substitute reducing agent and the carrier gas in a nozzle region of the first injection lance (6),
wherein the first injection lance (6) comprises an inner first pipe and a second pipe arranged around this, as a result of which an annular gap is formed between the first and the second pipe, surrounding the first pipe, wherein the substitute reducing agent and the carrier gas are passed through the first pipe and the oxygen is passed through the annular gap, **characterised in that** the carrier gas comprises a fuel gas, the components or oxidation components of which participate at least partially in the gasification reaction.

7. Method according to one of the claims 5 or 6, wherein the substitute reducing agent, together with the fuel gas and/or the oxygen, are fed via the tuyere into the reactor, in particular the blast furnace, through several first and/or several second injection lances.

8. Method according to one of the claims 5 to 7, wherein the discharge velocity and/or the quantity of the oxygen are adjusted depending on the reaction.

9. Method according to one of the preceding claims, wherein a mixing of the substitute reducing agent and carrier gas with oxygen is promoted through a turbulence-inducing structure.

10. Method according to one of the preceding claims, wherein a ratio between substitute reducing agent and fuel gas and/or a discharge velocity and/or an injected quantity of the substitute reducing agent and carrier gas are adjusted depending on the reaction.

11. Method according to one of the preceding claims, wherein the carrier gas and/or the substitute reducing agent and/or the oxygen have a temperature of between 100°C and 950°C.

12. Method according to one of the claims 2 to 11, wherein the fuel gas consosts carbon monoxide, carbon dioxide, hydrogen, water vapour, oxygen, hydrocarbon or a mixture thereof, in particular of furnace gas, natural gas, coke gas, converter gas, a different blast furnace gas or a mixture thereof.

## Revendications

1. Procédé d'insufflation pneumatique d'un agent réducteur de substitution pulvérulent dans un procédé de flux dense, une densité de flux de l'agent réducteur de substitution pulvérulent étant égale à 60 % ou plus de la densité de tassement en vrac, au moyen d'un gaz de transport dans un réacteur, en particulier dans un réacteur de gazéification, ou par l'intermédiaire d'une tuyère (7) dans un haut-fourneau,
de telle sorte que l'agent réducteur de substitution est gazéifié dans une réaction de gazéification,
**caractérisé en ce que** le gaz de transport comporte un gaz combustible, à savoir du monoxyde de carbone, de l'hydrogène, de la vapeur d'eau, de l'oxygène, un hydrocarbure, un gaz de haut-fourneau, du gaz naturel, du gaz de coke, du gaz de convertisseur, un autre gaz de couplage ou un mélange de ceux-ci.

2. Procédé d'insufflation pneumatique d'un agent réducteur de substitution pulvérulent dans un procédé de flux dense, une densité de flux de l'agent réducteur de substitution pulvérulent étant égale à 60 % ou plus de la densité de tassement en vrac, au moyen d'un gaz de transport dans un réacteur, en particulier dans un réacteur de gazéification, ou par l'intermédiaire d'une tuyère (7) dans un haut-fourneau,
de telle sorte que l'agent réducteur de substitution est gazéifié dans une réaction de gazéification,
**caractérisé en ce que** le gaz de transport est constitué d'un gaz combustible, dont les composants ou leurs composants d'oxydation participent au moins en partie à la réaction de gazéification, et d'un autre gaz ou mélange de gaz que le gaz combustible.

3. Procédé selon l'une quelconque des revendications précédentes, dans lequel le gaz de transport est constitué du gaz combustible pour au moins 2 % en poids, de manière préférée au moins 5 % en poids, de préférence au moins 10 % en poids, et dans lequel le gaz de transport est constitué du gaz combustible en particulier pour au plus 90 % en poids, de manière préférée au plus 50 % en poids, de manière plus préférée au plus 25 % en poids, de manière plus préférée au plus 20 % en poids,
et/ou dans lequel l'autre gaz comporte de l'azote.

4. Procédé selon l'une quelconque des revendications précédentes, dans lequel l'agent réducteur de substitution est insufflé avec le gaz de transport par une première lance d'insufflation (6, 16),
dans lequel la première lance d'insufflation (6, 16) fait saillie de préférence dans la tuyère (7).

5. Procédé selon la revendication 4, dans lequel de l'oxygène est apporté au réacteur, en plus de l'agent réducteur de substitution et du gaz de transport, par la première lance d'insufflation (6), et est réuni avec l'agent réducteur de substitution et le gaz de transport dans une zone d'embouchure de la première lance d'insufflation (6),
dans lequel la première lance d'insufflation (6) comporte de préférence un premier tuyau intérieur et un second tuyau agencé autour, une fente annulaire qui entoure le premier tuyau étant ainsi formée entre le premier et le second tuyau, l'agent réducteur de substitution et le gaz de transport étant conduits par le premier tuyau et l'oxygène étant conduit par la fente annulaire, ou
dans lequel la première lance d'insufflation (16) est un tuyau simple et dans lequel de l'oxygène est conduit dans le réacteur, de préférence par l'intermédiaire de la tuyère (7) dans le haut-fourneau, par une seconde lance d'insufflation (17).

6. Procédé d'insufflation pneumatique d'un agent réducteur de substitution pulvérulent dans un procédé de flux dense, une densité de flux de l'agent réducteur de substitution pulvérulent étant égale à 60% ou plus de la densité de tassement en vrac, au moyen d'un gaz de transport dans un réacteur, en particulier dans un réacteur de gazéification, ou par l'intermédiaire d'une tuyère (7) dans un haut-fourneau,
de telle sorte que l'agent réducteur de substitution est gazéifié dans une réaction de gazéification,
dans lequel l'agent réducteur de substitution est insufflé avec le gaz de transport par une première lance d'insufflation (6),
dans lequel de l'oxygène est apporté au réacteur, en plus de l'agent réducteur de substitution et du gaz de transport, par la première lance d'insufflation (6), et est réuni à l'agent réducteur de substitution et le gaz de transport dans une zone d'embouchure de la première lance d'insufflation (6),
dans lequel la première lance d'insufflation (6) comporte un premier tuyau intérieur et un second tuyau agencé autour, une fente annulaire qui entoure le premier tuyau étant ainsi formée entre le premier et le second tuyau, l'agent réducteur de substitution et le gaz de transport étant conduits par le premier tuyau et l'oxygène étant conduit par la fente annulaire, **caractérisé en ce que** le gaz de transport comporte un gaz combustible dont les composants ou leurs composants d'oxydation participent au moins en partie à la réaction de gazéification.

7. Procédé selon l'une quelconque des revendications 5 ou 6, dans lequel l'agent réducteur de substitution est conduit avec le gaz combustible et/ou l'oxygène par plusieurs premières et/ou plusieurs secondes lances d'insufflation par l'intermédiaire de la tuyère dans le réacteur, en particulier dans le haut-fourneau.

8. Procédé selon l'une quelconque des revendications 5 à 7, dans lequel la vitesse de sortie et/ou la quantité de l'oxygène sont réglées en fonction de la réaction.

9. Procédé selon l'une quelconque des revendications précédentes, dans lequel un mélange de l'agent réducteur de substitution et du gaz de transport avec de l'oxygène est transporté par une structure de tourbillonnement.

10. Procédé selon l'une quelconque des revendications précédentes, dans lequel un rapport entre agent réducteur de substitution et gaz combustible et/ou une vitesse de sortie et/ou une quantité insufflée de l'agent réducteur de substitution et du gaz de transport sont réglés en fonction de la réaction.

11. Procédé selon l'une quelconque des revendications précédentes, dans lequel le gaz de transport et/ou l'agent réducteur de substitution et/ou l'oxygène présentent une température comprise entre 100 °C et 950 °C.

12. Procédé selon l'une quelconque des revendications 2 à 11, dans lequel le gaz combustible est constitué de monoxyde de carbone, de dioxyde de carbone, d'hydrogène, de vapeur d'eau, d'oxygène, d'hydrocarbure ou d'un mélange de ceux-ci, en particulier de gaz de haut-fourneau, de gaz naturel, de gaz de coke, de gaz de convertisseur, d'un autre gaz de couplage ou d'un mélange de ceux-ci.
